# EUROPÄISCHE PATENTANMELDUNG

(11) **EP 2 944 368 A1**
(43) Veröffentlichungstag der Anmeldung: **18.11.2015**
(21) Anmeldenummer: 15167502.2
(22) Anmeldetag: 13.05.2015
(51) Int. Cl.: B01D 53/14

(54) **VERFAHREN UND VORRICHTUNG ZUR REINIGUNG EINES ABGASSTROMES**

(30) Priorität: 13.05.2014 AT 503372014
(71) Anmelder: Scheuch GmbH, 4971 Aurolzmünster (AT)
(72) Erfinder: Altmann, Erwin, 4774 St. Marienkirchen bei Schärding (AT); Hagn, Sebastian, 4782 St. Florian am Inn (AT); Lisberger, Manfred, 4752 Riedau (AT)
(74) Vertreter: Sonn & Partner Patentanwälte

(57) **Zusammenfassung**

Verfahren und Vorrichtung zur Reinigung eines bei der Verarbeitung von Holzwerkstoffen entstehenden, mit Schadstoffen wie organischen Kohlenstoffverbindungen beladenen Abgasstroms (2), wobei der Abgasstrom (2) in einer Absorptionszone mit einem flüssigen Absorptionsmittel in Kontakt gebracht wird, wobei die Schadstoffe in dem flüssigen Absorptionsmittel absorbiert werden und zumindest ein die Schadstoffe mitführender Teilstrom des flüssigen Absorptionsmittels erhitzt und durch thermische Regeneration von den Schadstoffen befreit wird.

## Beschreibung

Die Erfindung betrifft ein Verfahren zur Reinigung eines bei der Verarbeitung von Holzwerkstoffen entstehenden, mit Schadstoffen wie organischen Kohlenstoffverbindungen beladenen Abgasstroms, wobei der Abgasstrom in einer Absorptionszone mit einem flüssigen Absorptionsmittel in Kontakt gebracht wird, wobei die Schadstoffe in dem flüssigen Absorptionsmittel absorbiert werden.

Weiters betrifft die Erfindung eine Vorrichtung zur Reinigung eines bei der Verarbeitung von Holzwerkstoffen entstehenden, mit Schadstoffen wie organischen Kohlenstoffverbindungen beladenen Abgasstroms, mit einer Absorptionseinrichtung zur Absorption von in dem Abgasstrom enthaltenen Schadstoffen in einem flüssigen Absorptionsmittel.

Für die Zwecke dieser Offenbarung können als holzverarbeitende Verfahren insbesondere die Trocknung von Holz, die Herstellung von Pellets, die Trocknung von teilweise beleimten Holzfasern, das Pressen von Fasern mit Additiven zur Herstellung von Holzfaserdämmstoffen oder Faserplatten, die Trocknung von Spänen oder das Pressen von Spänen mit Additiven zur Herstellung von Spanplatten, die Trocknung von Strands, das Pressen von sogenannten Strands mit Additiven zur Herstellung von Grobspanplatten, auch OSB-Platten (englisch: oriented strand board) genannt, sowie die Herstellung von Sperrholzplatten vorgesehen sein.

Bei solchen Verfahren entstehen, insbesondere bei gleichzeitiger Einwirkung von erhöhten Temperaturen, mit organischen Schadstoffen belastete Abluftströme, welche vor der Abgabe an die Umgebungsluft gereinigt werden müssen.

Zu diesem Zweck ist es im Stand der Technik bekannt, eine Absorptionszone vorzusehen, in welcher die Schadstoffe aus der gasförmigen Phase in eine wässrige Phase abgegeben werden. Dieser Vorgang wird als Absorption bezeichnet. Dafür wird beim Stand der Technik beispielsweise ein Sprüh-Wäscher verwendet, bei welchem eine eingedüste Waschflüssigkeit mit den Schadstoffen beladen wird. Um den Stoffaustausch aufrecht erhalten zu können, muss die Waschflüssigkeit entweder kontinuierlich oder in Intervallen regeneriert werden. In Abwesenheit von Maßnahmen zur Regeneration der Waschflüssigkeit würde es abhängig von den Prozessbedingungen, wie Abgas- und Kreislaufwassertemperatur, Konzentrationen der organischen Verbindungen im Abluftstrom, nach einer gewissen Betriebszeit von beispielsweise 5 - 30 Stunden für die einzelnen Verbindungen zu einer Sättigung, d.h. einer maximalen Konzentration, der Waschflüssigkeit kommen. Danach könnte der betreffende Schadstoff nicht weiter aus dem Abgasstrom abgeschieden werden, sodass die Schadstoffreduktion zum Erliegen käme. Demnach ist es beim Stand der Technik erforderlich, die Waschflüssigkeit kontinuierlich oder in Intervallen durch biologische oder chemische Abwasserreinigung aufzubereiten und teilweise durch Frischwasser oder unbelastetes Prozesswasser zu ersetzen. Damit geht jedoch nachteiligerweise ein hoher Energieaufwand sowie ein hoher Chemikalien- und Wasserverbrauch einher.

Bei abliegenden Anwendungen ist es bekannt, die Waschflüssigkeit einer Regeneration zu unterziehen.

In der US 2011/0052453 A1 wird beispielsweise ein Verfahren zum Entfernen von Kohlendioxid und anderen Schadstoffen aus einem Abgasstrom beschrieben, wobei ein Regeneratorturm zur Regeneration der Waschflüssigkeit vorgesehen ist.

Die US 2011/0256043 A1 bezieht sich auf ein Verfahren zur Behandlung von Erdgas, wobei auch hier ein Regeneratorturm vorgesehen wird.

Die US 2013/0161563 A1 betrifft ein Verfahren zur Herstellung von Synthesegas.

Die CN 102 995 479 A betrifft ein Verfahren zur Behandlung von Abgasen bei der Verarbeitung von Bambusholzbrei.

Die Aufgabe der vorliegenden Erfindung besteht darin, ein Verfahren und eine Vorrichtung zur Reinigung der in der Holzindustrie anfallenden Abgasströme zu schaffen, mit welchem bzw. mit welcher die Nachteile des Standes der Technik gelindert bzw. behoben werden. Die Erfindung setzt sich daher insbesondere zum Ziel, die Abgasströme in der Holzindustrie wirkungsvoll und mit möglichst geringem Energieaufwand von Schadstoffen zu befreien. Zur Lösung dieser Aufgabe sieht die Erfindung ein Verfahren mit den Merkmalen von Anspruch 1 und eine Vorrichtung mit den Merkmalen von Anspruch 17 vor. Bevorzugte Ausführungsformen der Erfindung sind in den abhängigen Ansprüchen angegeben.

Erfindungsgemäß wird zumindest ein die Schadstoffe mitführender Teilstrom des flüssigen Absorptionsmittels erhitzt und durch thermische Regeneration von den Schadstoffen befreit.

Vorteilhafterweise kann daher auf die beim Stand der Technik üblichen chemischen Trennverfahren zur Entfernung der Schadstoffe aus den Abgasströmen der Holzverarbeitung verzichtet werden. Dadurch kann der Energieaufwand für die Abgasreinigung wesentlich reduziert werden. Zudem sind keine Chemikalien erforderlich. Weiters kann der Verbrauch an flüssigem Absorptionsmittel, insbesondere Wasser, deutlich reduziert werden. Für die Zwecke dieser Offenbarung bezeichnet die thermische Regeneration jedes bei im Vergleich zur Absorption höheren Temperaturen durchgeführtem Trennverfahren, mit welchem der Anteil von Schadstoffen in den Abgasströmen reduziert wird. Als Schadstoffe können insbesondere organische Kohlenstoffverbindungen, wie zum Beispiel Formaldehyd, Methanol, Acetaldehyd, Acrolein, Ameisensäure oder Essigsäure, vorgesehen sein.

Gemäß einer besonders bevorzugten Ausführung wird der Teilstrom des flüssigen Absorptionsmittels zur thermischen Regeneration durch eine mit einem Unterdruck beaufschlagte Destillationszone geführt. Bei dieser Ausführung wird daher ein Teilstrom des flüssigen Absorptionsmittels nach der Absorption abgezweigt, erhitzt und danach der Destillationszone zugeführt, in welcher ein Unterdruck erzeugt wird. Dadurch werden Schadstoffe aus dem flüssigen Absorptionsmittel in die gasförmige Phase überführt, wobei ein Konzentrat von Schadstoffen aus der Destillationszone abgezogen wird. Vorteilhafterweise kann dieses Konzentrat vergleichsweise einfach verarbeitet werden, wobei beispielsweise eine thermische Nachverbrennung durchgeführt werden kann. Diese Ausführung zeichnet sich durch einen besonders geringen Energieaufwand bei der thermischen Regeneration des flüssigen Absorptionsmittels aus.

Gemäß einer weiteren bevorzugten Ausführung wird der Teilstrom des flüssigen Absorptionsmittels zur thermischen Regeneration in einer Desorptionszone mit einem Strippgas in Kontakt gebracht, wobei in dem flüssigen Absorptionsmittel absorbierte Schadstoffe durch Desorption an das Strippgas abgegeben werden. Vorteilhafterweise können dadurch die Schadstoffe von bei der Holzverarbeitung anfallenden Abgasströmen über den mehrstufigen Prozess in dem Strippgas angereichert werden, welches vergleichsweise einfach und kostengünstig zu reinigen ist. Als Strippgas wird bevorzugt Frischluft, vorgewärmte Frischluft, aber auch Dampf verwendet. Zur Reduzierung des Dampfdruckes kann in der Desorptionszone ein Unterdruck angelegt werden.

Zur Erzielung einer großflächigen Austauschzone ist es günstig, wenn der Teilstrom des flüssigen Absorptionsmittels über einen Sprühwäscher in die Desorptions- oder Destillationszone eingebracht wird.

In der Absorptionszone für die Abgase der Holzverarbeitung werden nicht nur Kohlenstoffverbindungen aufgenommen, sondern auch Holzfasern, Paraffine und Harze abgeschieden. Diese abgeschiedenen Stoffe führen dazu, dass nachfolgende Komponenten, wie Wärmetauscher oder Einbauten in der Desroptions- oder Destillationszone binnen kurzer Zeit teilweise oder auch komplett durch Holzfasern verstopft werden und aufwendig durch Wartungspersonal gereinigt werden müssen. In der Zeit der Reinigung steht die Anlage nachteiligerweise nicht zur Verfügung.

Daher ist es günstig, wenn der Teilstrom des flüssigen Absorptionsmittels vor der thermischen Regeneration, vorzugsweise durch Sedimentation und/oder Flotation und/oder Siebung, von Feststoffen und Harz befreit wird. Darüber hinaus kann eine solche Einrichtung zur Reinigung von Feststoffen oder Harz auch in einer Kreislaufleitung der Absorptionseinrichtung vorgesehen sein, mit welcher das flüssige Absorptionsmittel in die Absorptionszone eingebracht wird. Vorteilhafterweise kann daher eine umfangreiche Kreislaufwasser- und Zulaufreinigung zur Desorptions- oder Destillationszone vorgesehen werden, um dauerhaft einen störungsfreien Betrieb zu gewährleisten. Die Harze können durch eine Kombination aus Sedimentation und Flotation abgetrennt werden. Zur Unterstützung der Schwerkraftabtrennung kann zudem eine Additivdosierung vorgesehen werden. Die Holzfasern können ebenfalls durch eine kombinierte Sedimentation und Flotation oder durch eine Siebung abgetrennt werden.

Je nach Anwendung ist bevorzugt vorgesehen, dass der Abgasstrom in der Absorptionszone durch einen Nass-Elektrofilter und/oder einen Pressenabluftwäscher und/oder einen Sprühwäscher geführt wird. Die Absorptionszone kann demnach als Nasselektrofilter, als Pressenabluftwäscher oder aber als Sprühwäscher ausgeführt sein. Darüber hinaus kann die Absorptionseinrichtung einen Nasselektrofilter oder einen Pressenabluftwäscher und im Anschluss daran einen Sprühwäscher aufweisen.

Um die Abgabe der im flüssigen Absorptionsmittel gelösten Schadstoffe an das Strippgas auf effiziente Weise zu verbessern, ist es günstig, wenn die Temperatur des flüssigen Absorptionsmittels vor der thermischen Regeneration durch Wärmeaustausch mit einem Wärmeaustauschmedium erhöht wird.

Im Gegenzug kann die Absorption der Schadstoffe in der Absorptionszone gesteigert werden, wenn die Temperatur des flüssigen Absorptionsmittels nach der thermischen Regeneration durch Wärmeaustausch mit einem Wärmeaustauschmedium abgesenkt wird. Demnach wird das flüssige Absorptionsmittel vor der Rückführung in die Absorptionszone abgekühlt.

Die Energieeffizienz des Verfahrens kann in besonders vorteilhafter Weise verbessert werden, wenn das flüssige Absorptionsmittel nach der thermischen Regeneration zum Vorwärmen des flüssigen Absorptionsmittels vor der thermischen Regeneration herangezogen wird. Demnach kann die Wärmeenergie des flüssigen Absorptionsmittels nach dem Durchströmen der Desorptions- oder Destillationszone dazu genutzt werden, das flüssige Absorptionsmittel vor dem Eintritt in die Desorptions- oder Destillationszone vorzuwärmen. Vorteilhafterweise kann daher die für die Desorption bzw. Destillation erforderliche Wärmeenergie teilweise rückgewonnen werden. Der Wärmeaustausch zwischen den Strömungen des flüssigen Absorptionsmittels nach bzw. vor der thermischen Regeneration bildet ein Wärmeverschiebungssystem, mit welchem die Energiebilanz des Verfahrens wesentlich verbessert werden kann. Der Wärmeaustausch zwischen den Strömungen des flüssigen Absorptionsmittels unterschiedlicher Temperaturniveaus kann in einem passenden Wärmetauscher erfolgen, welcher im Stand der Technik an sich üblich ist und daher keine näheren Erläuterungen bedarf.

Um die Energieverluste des Wärmeverschiebungssystems zwischen den Strömungen des flüssigen Absorptionsmittels zu kompensieren, ist es vorteilhaft, wenn das flüssige Absorptionsmittel nach dem Vorwärmen mit einem zweiten Wärmeaustauschmedium weiter erhitzt wird.

Zur Absorption der Schadstoffe in dem flüssigen Absorptionsmittel mit geringem Energieaufwand ist es vorteilhaft, wenn das flüssige Absorptionsmedium in der Absorptionszone in einem Kreislauf geführt wird, wobei ein Teil des flüssigen Absorptionsmittels aus dem Kreislauf der Absorptionszone abgezweigt, durch thermische Regeneration gereinigt und danach in den Kreislauf der Absorptionszone rezykliert wird. Je nach Ausführung kann die gesamte Strömung des flüssigen Absorptionsmittels oder nur ein Teil davon durch die Desorptions- oder Destillationszone gefördert und in den Kreislauf der Absorptionszone rückgeführt werden.

Besonders bevorzugt ist eine Ausführung, bei welcher der Volumenstrom des Strippgases in der Desorptionszone zwischen 5% und 35% des Volumenstroms des Abgasstroms beträgt. Der wesentliche Vorteil dieser Ausführung liegt darin, dass die kleinvolumige Strömung des Strippgases wesentlich einfacher von den Schadstoffen befreit werden, kann als der großvolumige Abgasstrom des holzverarbeitenden Verfahrens.

Zur Anreicherung des Strippgases mit den Schadstoffen ist gemäß einer bevorzugten Ausführung vorgesehen, dass das flüssige Absorptionsmittel in der Desorptionszone durch eine Gegenstrom-Sprühkolonne geführt wird.

Vorzugsweise wird das Strippgas nach der Desorption durch einen Tropfenabscheider geleitet. Die Wasserdampfsättigung des Strippgases kann beispielsweise auf 95% eingestellt werden.

Um eine Kondensation in einer nachfolgenden Ableitung für das Strippgas zu verhindern, ist es günstig, wenn ein durch die Desorptionszone geführter Teilstrom der Strippgase nach der Tropfenabscheidung mit einem vor der Desorptionszone abgezweigten und durch Wärmeaustausch mit einem dritten Wärmeaustauschmedium erwärmten Teilstrom des Strippgases vermischt wird. Demnach wird das Strippgas in zumindest zwei Teilströme aufgespalten, wobei der eine Teilstrom durch die Desorptionszone geführt und der andere Teilstrom über eine Bypassleitung an der Desorptionszone vorbei geführt wird.

Um die in dem Strippgas in hoher Konzentration vorliegenden Schadstoffe zu entfernen, ist es günstig, wenn das mit Schadstoffen angereicherte Strippgas einer thermischen Nachverbrennung unterzogen wird. Aufgrund der Aufkonzentrierung der Schadstoffe in der Strippluft wird vorteilhafterweise keine zusätzliche Energie für die Nachverbrennung benötigt oder es kann sogar Energie für die Behandlung anderer Abgasströme gewonnen werden.

Bei der erfindungsgemäßen Vorrichtung zur Reinigung von bei der Verarbeitung von Holzwerkstoffen entstehenden, mit Schadstoffen wie organischen Kohlenstoffverbindungen, beladenen Abgasströmen ist eine Einrichtung zur thermischen Regeneration zumindest eines die Schadstoffe mitführenden Teilstroms des flüssigen Absorptionsmittels vorgesehen. Die Vorteile und technischen Effekte dieser Ausführung wurden vorstehend bereits in Verbindung mit dem Verfahren erläutert.

Gemäß einer bevorzugten, da besonders energieeffizienten Ausführung, weist die Einrichtung zur thermischen Regeneration des Teilstroms des flüssigen Absorptionsmittels eine mit einer Unterdruckerzeugungseinheit verbundene Destillationseinrichtung auf. Als Unterdruckerzeugungseinheit ist bevorzugt eine Vakuumpumpe vorgesehen, welche an die Destillationszone angeschlossen ist.

Gemäß einer alternativen Ausführung ist vorgesehen, dass die Einrichtung zur thermischen Regeneration eine Desorptionseinrichtung zur Desorption von in dem flüssigen Absorptionsmittel absorbierten Schadstoffen im Kontakt mit einem Strippgas aufweist.

Um die bei der Holzverarbeitung anfallenden Abgasströme zu reinigen, ist es günstig, wenn die Absorptionseinrichtung einen Nass-Elektrofilter und/oder einen Pressenabluftwäscher und/oder einen Sprühwäscher aufweist.

Um eine wirkungsvolle thermische Regeneration des flüssigen Absorptionsmittels zu erreichen, ist es von Vorteil, wenn in Strömungsrichtung des flüssigen Absorptionsmittels vor der Einrichtung zur thermischen Regeneration zumindest ein Wärmetauscher, vorzugsweise zwei Wärmetauscher, zur Erhöhung der Temperatur des flüssigen Absorptionsmittels durch Wärmeaustausch mit einem Wärmeaustauschmedium vorgesehen ist. Bevorzugt ist der in Strömungsrichtung des flüssigen Absorptionsmittels gesehen erste Wärmetauscher als Vorwärmetauscher ausgebildet, wobei der in Strömungsrichtung des flüssigen Absorptionsmittels gesehen zweite Wärmetauscher das flüssige Absorptionsmittel auf das für die thermische Regeneration erforderliche Temperaturniveau bringt.

Demgegenüber ist es zur Erzielung einer hohen Absorptionswirkung in der Absorptionszone zweckmäßig, wenn in Strömungsrichtung des flüssigen Absorptionsmittels nach der Einrichtung zur thermischen Regeneration ein Wärmetauscher zur Absenkung der Temperatur des flüssigen Absorptionsmittels durch Wärmeaustausch mit einem Wärmeaustauschmedium vorgesehen ist.

Die Energiebilanz der Vorrichtung kann verbessert werden, wenn der Wärmetauscher zu einem Wärmeaustausch zwischen einer Strömung des flüssigen Absorptionsmittels nach der Einrichtung zur thermischen Regeneration und einer Strömung des flüssigen Absorptionsmittels vor der Einrichtung zur thermischen Regeneration eingerichtet ist. Demnach werden die der Desorptions- bzw. Destillationseinrichtung zuzuführende Strömung des flüssigen Absorptionsmittels und die aus der Desorptions- bzw. Destillationseinrichtung abgeführte Strömung des flüssigen Absorptionsmittels in getrennte Wärmeleitungskanäle des Wärmetauschers geführt, um einen Wärmeaustausch zwischen den Strömungen des flüssigen Absorptionsmittels unterschiedlicher Temperaturniveaus herbeizuführen. Vorteilhafterweise kann so die Wärmeenergie für die thermische Regeneration teilweise rückgewonnen werden.

Bei einer bevorzugten Ausführung der Destillationseinrichtung ist eine Steuer- bzw. Regeleinrichtung zur Einstellung des Volumenstroms des Strippgases in der Desorptionseinrichtung auf 5% bis 35% des Volumenstroms des Abgasstroms vorgesehen. Demnach wird ein vergleichsweise geringer Volumenstrom des Strippgases durch die Desorptionseinrichtung gefördert, sodass die Schadstoffe nach der Desorption in hoher Konzentration vorliegen. Dadurch kann vorteilhafterweise die Nachbehandlung des Strippgases, insbesondere durch thermische Nachverbrennung, wesentlich energieeffizienter gestaltet werden.

Weiters ist es günstig, wenn eine Strippluftzuleitung einen ersten Zuleitungsabschnitt zum Fördern eines ersten Teilstroms der Strippgase durch die Desorptionszone und eine mit einem dritten Wärmetauscher verbundenen zweiten Zuleitungsabschnitt aufweist, welcher unter Umgehung der Desorptionszone mit einer Ableitung der Desorptionseinrichtung verbunden ist.

Die Erfindung wird nachstehend anhand von in den Zeichnungen gezeigten Ausführungsbeispielen, auf die sie jedoch nicht beschränkt sein soll, noch weiter erläutert. Im Einzelnen zeigt:
Fig. 1 ein Funktionsschema einer erfindungsgemäßen Vorrichtung zur Reinigung eines bei der Verarbeitung von Holzwerkstoffen entstehenden, mit Schadstoffen wie organischen Kohlenstoffverbindungen beladenen Abgasstroms, welche eine Absorptionseinrichtung und eine Desorptionseinrichtung aufweist;
Fig. 2 ein Funktionsschema der Desorptionseinrichtung der Vorrichtung gemäß Fig. 1;
Fig. 3 ein Funktionsschema einer weiteren erfindungsgemäßen Vorrichtung, bei der die Absorptionseinrichtung einen Nass-Elektrofilter aufweist;
Fig. 4 ein Funktionsschema einer weiteren erfindungsgemäßen Vorrichtung, bei der die Absorptionseinrichtung einen Pressenabluftwäscher aufweist; und
Fig. 5 ein Funktionsschema einer weiteren erfindungsgemäßen Vorrichtung, bei welcher eine Destillationseinrichtung zur Destillation des flüssigen Absorptionsmittels vorgesehen ist;

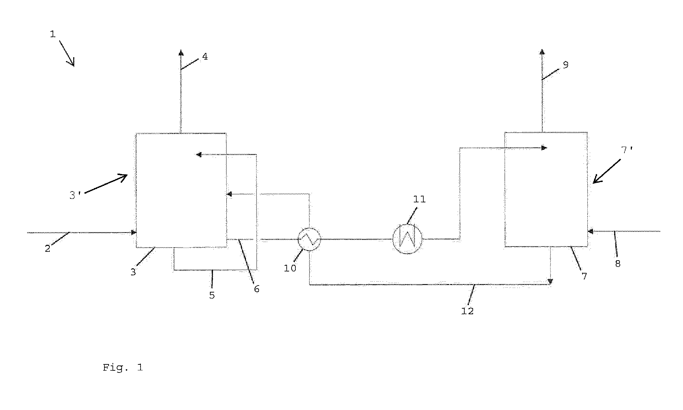

Fig. 1 zeigt eine Vorrichtung 1 zur Reinigung eines bei der Verarbeitung von Holzwerkstoffen entstehenden, mit Schadstoffen wie organischen Kohlenstoffverbindungen beladenen Abgasstroms 2. Viele der im Abluftstrom 2 enthaltenen organischen Schadstoffe, wie zum Beispiel Formaldehyd, Methanol, Acetaldehyd, Acrolein, Ameisensäure oder Essigsäure und andere sind wasserlöslich und können über die in Fig. 1 gezeigte Vorrichtung 1 wirkungsvoll und dauerhaft aus dem Abgasstrom 2 entfernt werden.

Die Vorrichtung 1 weist eine Absorptionseinrichtung 3 auf, in welcher in dem Abgasstrom 2 enthaltene Schadstoffe an einem flüssigen Absorptionsmittel, insbesondere Wasser, absorbiert werden, sodass gereinigte Abgase 4 die Absorptionseinrichtung 3 verlassen. Die Absorptionseinrichtung 3 ist mit einem Kreislauf 5 verbunden, mit welchem das flüssige Absorptionsmittel im Gegenstrom zu dem Abgasstrom 2 durch die Absorptionszone gefördert wird. Im ersten Verfahrensschritt wird demnach eine ausreichend große Stoffaustauschzone geschaffen, um den Transfer der Schadstoffe aus der gasförmigen Phase in die wässrige Phase zu ermöglichen. Dieser Vorgang wird mit Absorption bezeichnet. Die Absorptionseinrichtung 3 weist gemäß Fig. 1 einen Sprüh-Wäscher 3' auf, wobei durch viele feine Tropfen eine entsprechende Fläche für den Stoffaustausch zur Verfügung gestellt wird. Weiters können in der Absorptionseinrichtung 3 berieselte Wäscherböden den gewünschten Stoffaustausch herbeiführen. Um Verstopfungen durch Fasern und oder Harze zu verhindern, ist die Absorptionseinrichtung 3 frei von Füllkörperwäschern oder berieselten Packungen. In der Absorptionszone wird die eingedüste Waschflüssigkeit, d.h. das flüssige Absorptionsmittel, mit den Schadstoffen des Abgasstroms 2 beladen. Um den Stoffaustausch aufrechterhalten zu können, muss das flüssige Absorptionsmittel entweder kontinuierlich oder in Intervallen regeneriert werden.

Wie aus Fig. 1 weiters ersichtlich, ist die Absorptionseinrichtung 3 mit einer Abzweigung 6 verbunden, mit welcher ein Teilstrom des flüssigen Absorptionsmittels aus dem Kreislauf 5 der Absorptionseinrichtung 3 abgezweigt wird. Die Abzweigung 6 ist mit einer Einrichtung 7 zur thermischen Regeneration des die Schadstoffe mitführenden Teilstroms des flüssigen Absorptionsmittels verbunden. Dadurch kann einer Sättigung des flüssigen Absorptionsmittels mit den Schadstoffen im Dauerbetrieb vorgebeugt werden.

Gemäß Fig. 1 weist die Einrichtung 7 zur thermischen Regeneration eine Desorptionseinrichtung 7' zur Desorption von in dem flüssigen Absorptionsmittel absorbierten Schadstoffen im Kontakt mit einem Strippgas auf. Die Desorptionseinrichtung 7 ist dafür mit einer Zuleitung 8 zur Zuführung eines Strippgases verbunden, welches in der Desorptionszone im Gegenstrom zu dem flüssigen Absorptionsmittels geführt wird, um einen Teil der in dem flüssigen Absorptionsmittel gelösten Schadstoffe durch Desorption aufzunehmen. Das Strippgas verlässt die Desorptionseinrichtung 7 über eine Ableitung 9, um beispielsweise einer thermischen Nachverbrennung unterzogen zu werden. Der Volumenstrom des Strippgases in der Desorptionszone beträgt zwischen 5% und 35% des Volumenstroms des Abgasstroms 2, sodass das Strippgas in der Ableitung 9 eine wesentlich höhere Konzentration von Schadstoffen als der Abgasstrom 2 aufweist, wodurch die Nachbehandlung der Schadstoffe wesentlich einfacher und mit geringerem Energieaufwand durchgeführt werden kann. Demnach weist die gezeigte Vorrichtung 1 im Anschluss an die Absorptionsstufe 3 eine Desorptionsstufe 7 auf. Die Desorption bildet den Umkehrprozess zur Absorption, wobei ein selektiver Übergang von gelösten flüssigen Schadstoffen in die Gasphase erfolgt. Dieser Vorgang wird häufig auch als Strippen bezeichnet. Die beladene Waschflüssigkeit kann durch Desorption, d.h. eine thermische Waschwasseraufbereitung, regeneriert werden und steht danach wieder für die Absorption und somit zur abluftseitigen Reduktion der Schadstoffe zur Verfügung.

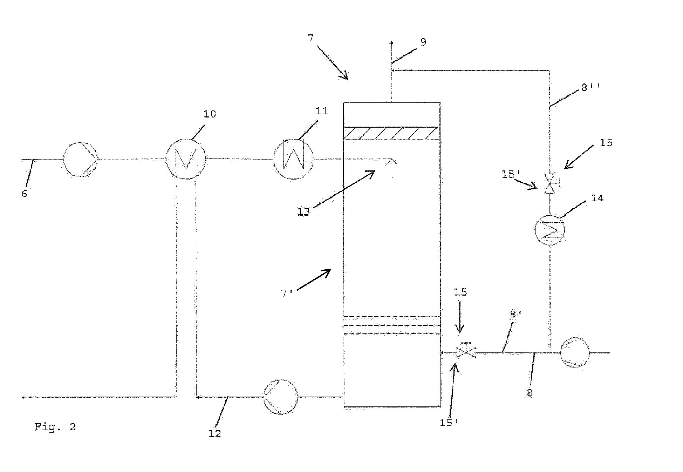

Wie aus Fig. 1 ersichtlich, weist die Vorrichtung 1 zwei Wärmetauscher 10, 11 in der Abzweigung 6 zwischen der Absorptionseinrichtung 3 und der Desorptionseinrichtung 7 auf, mit welchen die Temperatur des flüssigen Absorptionsmittels auf ein für die Desorption zweckmäßiges Niveau erhöht wird. Demnach wird zumindest ein Teil des mit Schadstoffen beladenen flüssigen Absorptionsmittels über eine Desorptionskolonne geführt und regeneriert. Zunächst wird das Temperaturniveau des flüssigen Absorptionsmittels durch den, insbesondere mit Dampf oder Thermoöl betriebenen Wärmetauscher 11, auf ca. 60 bis 100 °C angehoben. Im Anschluss an die Aufheizung erfolgt die Aufgabe in eine Strippkolonne der Desorptionseinrichtung 7, bei welcher es sich um einen Sprüh-, Füllkörper- oder Tropfkörperwäscher handeln kann (vgl. Fig. 2). Dabei wird das flüssige Absorptionsmittel im Gegenstrom mit Umgebungs- bzw. Frischluft, dem sogenannten Strippgas, in Kontakt gebracht. Bei diesem Vorgang wird das Absorbat aus der flüssigen in die gasförmige Phase überführt. Durch stetige Zuführung von Strippgas in die Desorptionszone wird der Partialdruck des Absorbats in der Gasphase gering gehalten. Zudem wird das Phasengleichgewicht maßgeblich durch die Temperatur der zu reinigenden Waschflüssigkeit bestimmt. Demgemäß wird ein effizienter Stoffübergang in der Desorberkolonne durch Anhebung des Temperaturniveaus des zugeführten Desorbens erreicht. Zur Erreichung der erforderlichen Reinigungsleistung werden daher das Verhältnis zwischen den Volumenströmen von Desorbens und Strippgas sowie die Temperaturspreizung zwischen Desorbens und zugeführtem Strippgas als wesentliche Einflussgrößen eingestellt. Die Austauschrichtung ist daher umgekehrt zum Absorptionsvorgang, indem hohe Temperaturen und niedriger Partialdruck die Löslichkeit des Absorbats im Strippgas erhöhen.

Wie aus Fig. 1 weiters ersichtlich, wird das flüssige Absorptionsmittel nach dem Durchströmen der Desorptionszone über eine Abführung 12 abgeführt. Danach wird die Temperatur des flüssigen Absorptionsmittels abgesenkt, um die Absorption in der Absorptionseinrichtung 3 zu steigern. In der gezeigten Ausführung erfolgt in dem ersten Wärmetauscher 10 ein Wärmeaustausch zwischen der nach der Desorption in die Abführung 12 abgeführten Strömung des flüssigen Absorptionsmittels höherer Temperatur und der aus der Absorptionszone für die Desorption in die Abzweigung 6 abgezweigten Strömung des flüssigen Absorptionsmittels niedrigerer Temperatur. Dadurch kann die Strömung des flüssigen Absorptionsmittels nach der Desorption zum Vorwärmen der Strömung des flüssigen Absorptionsmittels vor der Desorption genutzt werden, welche danach in dem zweiten Wärmetauscher 11 weiter erhitzt wird. Im Anschluss an den ersten Wärmetauscher 10 wird die gereinigte und abgekühlte Strömung des flüssigen Absorptionsmittels in die Absorptionseinrichtung 3 rezykliert.

Wie aus Fig. 2 ersichtlich, weist die Desorptionseinrichtung 7 in der gezeigten Ausführung eine Gegenstrom-Sprühkolonne 13 auf, mit welcher das flüssige Absorptionsmittel im Kontakt mit dem Strippgas in die Desorptionszone eingesprüht wird, damit die Schadstoffe in dem Strippgas angereichert werden. In Strömungsrichtung des Strippgases gesehen nach der Gegenstrom-Sprühkolonne 13 ist ein Tropfenabscheider 14 vorgesehen, mit welchem das Strippgas vor der Ableitung 9 entfeuchtet wird. Über den Tropfenabscheider 14 verlässt das angereicherte Strippgas die Desorptionseinrichtung 7. Um Kondensatbildung in der nachfolgenden Rohrleitung zu reduzieren, wird die Wasserdampfsättigung auf ca. 95 % eingestellt.

Wie aus Fig. 2 weiters ersichtlich, weist die Strippluftzuleitung 8 einerseits einen ersten Zuleitungsabschnitt 8', mit welchem ein erster Teilstrom der Strippgase durch die Desorptionszone mit der Gegenstrom-Sprühkolonne 13 gefördert wird, und andererseits einen zweiten Zuleitungsabschnitt 8" auf, welcher unter Umgehung der Desorptionszone mit der Ableitung 9 der Desorptionseinrichtung 7 verbunden ist. In dem zweiten Zuleitungsabschnitt 8" der Strippluftzuleitung 8 ist ein dritter Wärmetauscher 14 vorgesehen, mit welcher der zweite Teilstrom der Strippgase vor der Zusammenführung mit dem ersten Teilstrom der Strippgase in der Ableitung 9 erhitzt wird. Die Zuleitungsabschnitte 8', 8" weisen Ventilelemente 15' auf, mit welchen die Aufteilung der Teilströme des Strippgases auf die beiden Zuleitungsabschnitte eingestellt werden kann. Bei dieser Ausführung wird daher unmittelbar nach der Tropfenabscheidung ein vorgewärmter Luftstrom der angereicherten Desorberluft zugeführt, um Kondensation in der nachfolgenden Transportleitung zu vermeiden.

Wie aus Fig. 2 schematisch ersichtlich, ist eine Steuer- bzw. Regeleinrichtung 15 vorgesehen, mit welcher einerseits der Volumenstrom des Strippgases in der Desorptionszone der Desorptionseinrichtung 7 auf 5% bis 35% des Volumenstroms des Abgasstroms eingestellt werden kann. Darüber hinaus weist die Steuer- bzw. Regeleinrichtung 15 in den Zuleitungsabschnitten 8', 8" Ventilelemente 15' auf, mit welchen die Aufteilung der Teilströme des Strippgases auf die beiden Zuleitungsabschnitte 8', 8" eingestellt werden kann. Mit dem beschriebenen Verfahren können typischerweise Abscheidegrade von 50 - 90 % erreicht werden.

Zur Verbesserung der Abscheidung partikelförmiger Stoffe kann die Vorrichtung 1 um einen Nasselektrofilter, eine Venturistufe oder um einen Nass-Zyklonabscheider erweitert werden (nicht gezeigt). Neben der Reduktion von organischen Schadstoffen mittels der Kombination aus Absorptionsstufe 3 und Desorptionsstufe 7 können abgeschiedene Feststoffe aus dem Waschwasser mittels integrierter Wasseraufbereitungssysteme aus der Abgasreinigungsanlage entfernt werden. Die Reinigung des zu regenerierenden Waschwassers von Feststoffen mittels geeigneter Verfahren, wie Sedimentation, Flotation, Filtration, Siebung, Hydrozyklonierung, Zentrifugation, erleichtert einen störungsfreien und sicheren Betrieb der Absorptions- und Desorptionsstufen.

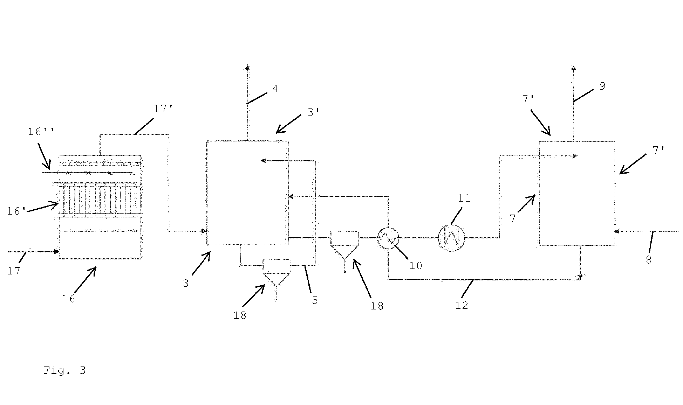

Bei der Ausführung gemäß Fig. 3 weist die Absorptionseinrichtung 3 einen in Fig. 3 schematisch dargestellten Nass-Elektrofilter 16 auf. Das von einem Trockner kommende Rohgas wird in einer Rohgasleitung 17 durch Eindüsen von Wasser (nicht gezeigt) bis zum Erreichen des Sättigungspunktes abgekühlt (sogenannter Quench). Gleichzeitig wird die Innenseite der Rohgasleitung 17 von Ablagerungen freigehalten. Das abgekühlte Abgas tritt in den Nass-Elektrofilter 16 ein und wird durch einen Wäscher- und Gasverteilboden gleichmäßig über den gesamten Querschnitt verteilt. Staub- und gasförmige organische Verbindungen werden weitgehend abgeschieden. Das vorgereinigte Trocknerabgas strömt nun vertikal von unten durch Nasselektrofilterelemente 16', welche senkrecht angeordnete Wabenbündel als Niederschlagselektroden und zentrisch angeordnete Sprühelektroden aufweisen. Die Sprühelektroden erzeugen durch eine hohe Gleichspannung eine Koronaentladung, mit welcher das Gas ionisiert wird. Die noch im Gas befindlichen Staubpartikel und Aerosole ("Blue haze") werden negativ aufgeladen und wandern im elektrischen Feld zu der geerdeten, positiven Innenwandung der Waben. Dadurch werden auch die Aerosole unter die Sichtbarkeitsgrenze abgeschieden. Durch ein über den Waben angeordnetes Düsensystem 16" wird der an den Niederschlagsflächen abgeschiedene Staub mit Prozesswasser periodisch abgespült. Für die Rohgasleitung 17, den Wasserkreislauf des Wäschers und zur Spülung der Waben stehen zwei Pumpen zur Verfügung. Das gesamte in den Nasselektrofilter eingedüste Wasser wird in einem Wassersammelbecken (nicht gezeigt) gesammelt, in welchem Sedimentationseinbauten ein Absinken der im Wasser enthaltenen Feststoffe ermöglichen, und über eine interne Wasseraufbereitung mit Siebeinrichtung und Dekanter (nicht gezeigt) im Kreislauf geführt. Der sich am Boden des Wassersammelbeckens sammelnde Schlamm wird über eine Schnecke (nicht gezeigt) ausgetragen und über eine Exzenterschneckenpumpe zum Dekanter gepumpt und entwässert. Der Filtratablauf des Dekanters wird in das Wassersammelbecken zurückgeführt. Nach der Filtration in dem Nass-Elektrofilter 16 wird der Abgasstrom 2 über eine Leitung 17' in den Sprühwäscher 3' geführt. Die thermische Regeneration des flüssigen Absorptionsmittels, d.h. des Kreislaufwassers, wurde bereits anhand der Fig. 1, 2 erläutert.

Wie aus Fig. 3 weiters ersichtlich, weist einerseits die Abzweigung 6 und andererseits die Kreislaufleitung 5 eine Einrichtung 18 zur Befreiung der jeweiligen Strömung des flüssigen Absorptionsmittels von Feststoffen und Harz auf. Die Einrichtung 18 kann Sedimentations- und/oder Flotations- und/oder Siebmodule aufweisen. Demnach werden die Feststoffe und Harze einerseits aus dem Teilstrom des flüssigen Absorptionsmittels vor der thermischen Regeneration und andererseits aus der Strömung des flüssigen Absorptionsmittels vor der Einleitung in den Sprühwäscher 3' abgeschieden.

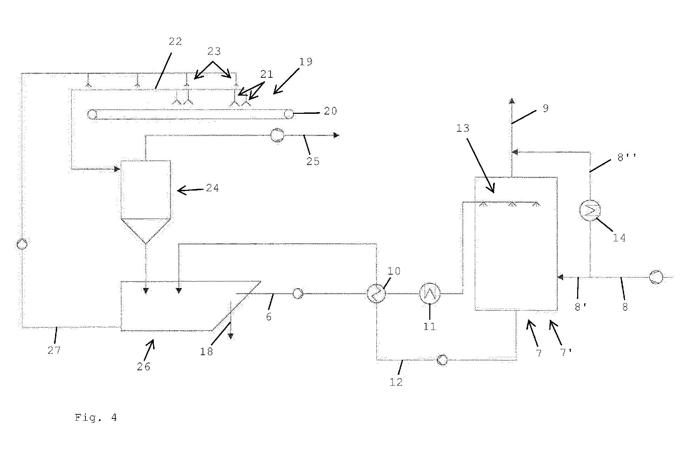

Bei der Ausführung gemäß Fig. 4 weist die Absorptionseinrichtung 3 einen Pressenabluftwäscher 19 für einen bei der Holzpressung mit einer Endlospresse 20 entstehenden Abgasstrom 2 auf. Der Abgasstrom 2 wird mit Absaughauben 21 erfasst und in einer Abgasleitung 22 durch Einbringen von Kreislaufwasser mit Düsen 23 bis zum Erreichen des Sättigungspunktes abgekühlt (sogenannter Quench). Gleichzeitig wird dadurch die Innenseite der Abgasleitung 22 weitgehend von störenden Ablagerungen freigehalten. Das abgekühlte Abgas wird von den bedüsten Absaughauben 21 durch einen Vorabscheider 24 abgesaugt, in dem eine Abtrennung von Bedüsungswasser mit Grobmaterial und Abgas stattfindet. Das gereinigte Abgas wird über eine Leitung 25 abgeleitet. Das flüssige Absorptionsmittel, hier Wasser, wird in eine Wasseraufbereitung 26 geführt und über eine Kreislaufleitung 27 zu den Düsen 23 rückgeführt. Die Wasseraufbereitung 26 ist mit der Abzweigung 6 zur thermischen Regenerationseinrichtung 7 verbunden, welche bereits anhand der Fig. 1, 2 beschrieben wurde. Darüber hinaus weist die Wasseraufbereitung 26 eine schematisch eingezeichnete Einrichtung 18 zur Abtrennung von Feststoffen auf.

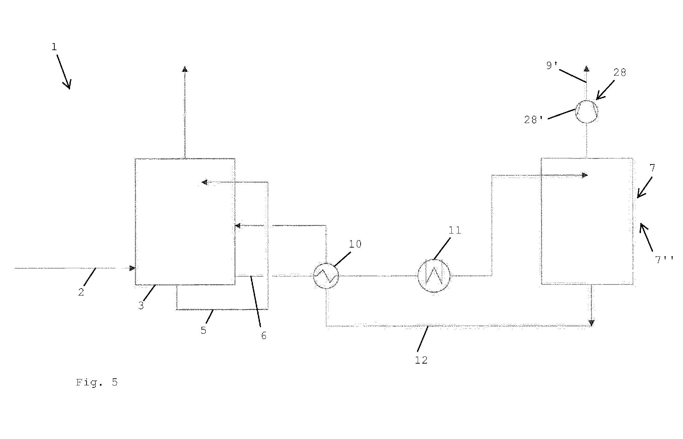

Fig. 5 zeigt eine weitere Ausführungsform der Vorrichtung 1 zur Reinigung der bei der Holzverarbeitung entstehenden Abgasströme 2, bei welcher die Einrichtung 7 zur thermischen Regeneration des Teilstroms des flüssigen Absorptionsmittels eine Destillationseinrichtung 7" aufweist, welche mit einer Unterdruckerzeugungseinheit 28, beispielsweise einer Vakuumpumpe 28', verbunden ist. Im Betrieb wird in der Destillationszone ein Unterdruck erzeugt, wodurch die Schadstoffe aus dem flüssigen Absorptionsmittel desorbiert und als gasförmiges Konzentrat über eine Ableitung 9' abgeführt werden.

## Patentansprüche

1. Verfahren zur Reinigung eines bei der Verarbeitung von Holzwerkstoffen entstehenden, mit Schadstoffen wie organischen Kohlenstoffverbindungen beladenen Abgasstroms (2), wobei der Abgasstrom (2) in einer Absorptionszone mit einem flüssigen Absorptionsmittel in Kontakt gebracht wird, wobei die Schadstoffe in dem flüssigen Absorptionsmittel absorbiert werden, **dadurch gekennzeichnet, dass** zumindest ein die Schadstoffe mitführender Teilstrom des flüssigen Absorptionsmittels erhitzt und durch thermische Regeneration von den Schadstoffen befreit wird.

2. Verfahren nach Anspruch 1, **dadurch gekennzeichnet, dass** der Teilstrom des flüssigen Absorptionsmittels zur thermischen Regeneration durch eine mit einem Unterdruck beaufschlagte Destillationszone geführt wird.

3. Verfahren nach Anspruch 1, **dadurch gekennzeichnet, dass** der Teilstrom des flüssigen Absorptionsmittels zur thermischen Regeneration in einer Desorptionszone mit einem Strippgas in Kontakt gebracht wird, wobei in dem flüssigen Absorptionsmittel absorbierte Schadstoffe durch Desorption an das Strippgas abgegeben werden.

4. Verfahren nach einem der Ansprüche 1 bis 3, **dadurch gekennzeichnet, dass** der Teilstrom des flüssigen Absorptionsmittels über einen Sprühwäscher in die Desorptions- oder Destillationszone eingebracht wird.

5. Verfahren nach einem der Ansprüche 1 bis 4, **dadurch gekennzeichnet, dass** der Teilstrom des flüssigen Absorptionsmittels vor der thermischen Regeneration, vorzugsweise durch Sedimentation und/oder Flotation und/oder Siebung, von Feststoffen und Harz befreit wird.

6. Verfahren nach einem der Ansprüche 1 bis 5, **dadurch gekennzeichnet, dass** der Abgasstrom in der Absorptionszone durch einen Nass-Elektrofilter (16) und/oder einen Pressenabluftwäscher (19) und/oder einen Sprühwäscher (3') geführt wird.

7. Verfahren nach einem der Ansprüche 1 bis 6, **dadurch gekennzeichnet, dass** die Temperatur des flüssigen Absorptionsmittels vor der thermischen Regeneration durch Wärmeaustausch mit einem Wärmeaustauschmedium erhöht wird.

8. Verfahren nach einem der Ansprüche 1 bis 7, **dadurch gekennzeichnet, dass** die Temperatur des flüssigen Absorptionsmittels nach der thermischen Regeneration durch Wärmeaustausch mit einem Wärmeaustauschmedium abgesenkt wird, wobei vorzugsweise das flüssige Absorptionsmittels nach der thermischen Regeneration zum Vorwärmen des flüssigen Absorptionsmittels vor der thermischen Regeneration herangezogen wird, wobei vorzugsweise das flüssige Absorptionsmittel nach dem Vorwärmen mit einem zweiten Wärmeaustauschmedium weiter erhitzt wird.

9. Verfahren nach einem der Ansprüche 1 bis 8, **dadurch gekennzeichnet, dass** das flüssige Absorptionsmedium in der Absorptionszone in einem Kreislauf geführt wird, wobei ein Teil des flüssigen Absorptionsmittels aus dem Kreislauf der Absorptionszone abgezweigt, durch thermische Regeneration gereinigt und danach in den Kreislauf der Absorptionszone rezykliert wird.

10. Verfahren nach einem der Ansprüche 3 bis 9, **dadurch gekennzeichnet, dass** der Volumenstrom des Strippgases in der Desorptionszone zwischen 5% und 35% des Volumenstroms des Abgasstroms (2) beträgt und/oder dass das flüssige Absorptionsmittel in der Desorptionszone durch eine Gegenstrom-Sprühkolonne geführt wird.

11. Verfahren nach einem der Ansprüche 3 bis 10, **dadurch gekennzeichnet, dass** das Strippgas nach der Desorption durch einen Tropfenabscheider geleitet wird, wobei vorzugsweise ein durch die Desorptionszone geführter Teilstrom der Strippgase nach der Tropfenabscheidung mit einem vor der Desorptionszone abgezweigten und durch Wärmeaustausch mit einem dritten Wärmeaustauschmedium erwärmten Teilstrom des Strippgases vermischt wird.

12. Verfahren nach einem der Ansprüche 3 bis 11, **dadurch gekennzeichnet, dass** das mit Schadstoffen angereicherte Strippgas einer thermischen Nachverbrennung unterzogen wird.

13. Vorrichtung (1) zur Reinigung eines bei der Verarbeitung von Holzwerkstoffen entstehenden, mit Schadstoffen wie organischen Kohlenstoffverbindungen beladenen Abgasstroms (2), mit einer Absorptionseinrichtung (3) zur Absorption von in dem Abgasstrom (2) enthaltenen Schadstoffen in einem flüssigen Absorptionsmittel, **dadurch gekennzeichnet, dass** eine Einrichtung (7) zur thermischen Regeneration zumindest eines die Schadstoffe mitführenden Teilstroms des flüssigen Absorptionsmittels vorgesehen ist.

14. Vorrichtung (1) nach Anspruch 13, **dadurch gekennzeichnet, dass** die Einrichtung (7) zur thermischen Regeneration des Teilstroms des flüssigen Absorptionsmittels eine mit einer Unterdruckerzeugungseinheit (28) verbundene Destillationseinrichtung (7") aufweist oder dass die Einrichtung (7) zur thermischen Regeneration eine Desorptionseinrichtung (7') zur Desorption von in dem flüssigen Absorptionsmittel absorbierten Schadstoffen im Kontakt mit einem Strippgas aufweist.

15. Vorrichtung (1) nach Anspruch 13 oder 14, **dadurch gekennzeichnet, dass** eine Strippluftzuleitung (8) einen ersten Zuleitungsabschnitt (8') zum Fördern eines ersten Teilstroms der Strippgase durch die Desorptionszone und eine mit einem dritten Wärmetauscher (14) verbundenen zweiten Zuleitungsabschnitt (8") aufweist, welcher unter Umgehung der Desorptionszone mit einer Ableitung (9) der Desorptionseinrichtung (7) verbunden ist.
